(19) **Europäisches Patentamt / European Patent Office / Office européen des brevets**

(11) **EP 4 510 081 A1**

(12) **EUROPEAN PATENT APPLICATION**
published in accordance with Art. 153(4) EPC

(43) Date of publication:
**19.02.2025 Bulletin 2025/08**

(21) Application number: **23788006.7**

(22) Date of filing: **07.02.2023**

(51) International Patent Classification (IPC):
***G06T 15/20*** (2011.01)   ***G06T 19/00*** (2011.01)

(52) Cooperative Patent Classification (CPC):
**G06T 15/20; G06F 3/04815; G06F 3/04845;**
**G06T 7/55; G06T 7/73;** G06T 2200/24

(86) International application number:
**PCT/JP2023/003988**

(87) International publication number:
**WO 2023/199583 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.04.2022 JP 2022067949**

(71) Applicant: **Panasonic Intellectual Property
Management Co., Ltd.
Kadoma-shi, Osaka 571-0057 (JP)**

(72) Inventors:
• **TERANISHI, Kensho
  Kadoma-shi, Osaka 571-0057 (JP)**
• **MATSUNOBU, Toru
  Kadoma-shi, Osaka 571-0057 (JP)**

(74) Representative: **Grünecker Patent- und
Rechtsanwälte
PartG mbB
Leopoldstraße 4
80802 München (DE)**

(54) **VIEWER CONTROL METHOD AND INFORMATION PROCESSING DEVICE**

(57)     A viewer control method is a viewer control method for controlling a viewer, and includes: determining a first region around an actual viewpoint of a frame, the frame having been generated by shooting an object from the actual viewpoint (S114A); and outputting information on the first region to the viewer. The viewer displays a three-dimensional model of the object viewed from a virtual viewpoint in the first region (S115A). For example, the viewer control method may further include controlling the viewer not to display the three-dimensional model viewed from a virtual viewpoint in a second region other than the first region.

FIG. 16

**Description**

[Technical Field]

The present disclosure relates to a viewer control method and an information processing device.

[Background Art]

There is a technique of estimating a camera position and orientation with a camera image as input, and generating a three-dimensional model using the result of the estimation (for example, see Patent Literature (PTL) 1).

[Citation List]

[Patent Literature]

[PTL 1] International Publication WO 2021/0141775

[Summary of Invention]

[Technical Problem]

With a conventional viewer that displays a three-dimensional model, an arbitrary virtual viewpoint can be selected. However, instead of arbitrarily selecting a virtual viewpoint in a viewer, there is a need to match a virtual viewpoint to an actual viewpoint of a frame that is an actual image. In view of this, the present disclosure has as an object to provide a viewer control method and an information processing device that are capable of matching a virtual viewpoint to an actual viewpoint of a frame that is an actual image, while providing a degree of freedom in selecting a virtual point in a viewer.

[Solution to Problem]

A viewer control method according to an aspect of the present disclosure is a viewer control method for controlling a viewer, and includes: determining a first region around an actual viewpoint of a frame, the frame having been generated by shooting an object from the actual viewpoint; and outputting information on the first region to the viewer, wherein the viewer displays a three-dimensional model of the object viewed from a virtual viewpoint in the first region.

[Advantageous Effects of Invention]

The present disclosure can provide a viewer control method and an information processing device that are capable of matching a virtual viewpoint to an actual viewpoint of a frame that is an actual image, while providing a degree of freedom in selecting a virtual point in a viewer.

[Brief Description of Drawings]

[FIG. 1]

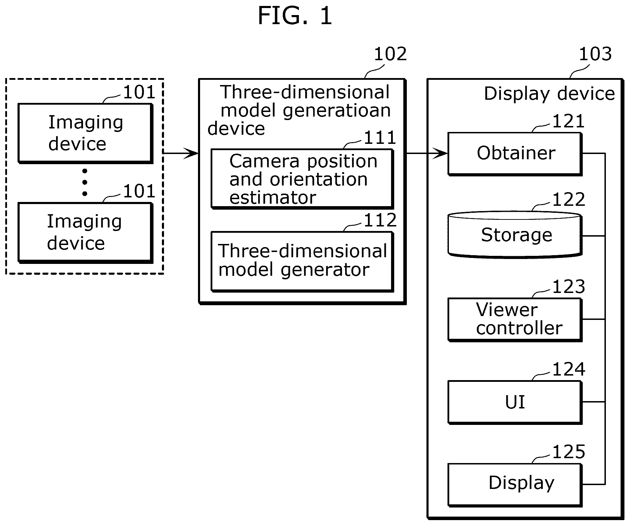

FIG. 1 is a block diagram of the configuration of a three-dimensional model display system according to an embodiment.
[FIG. 2]

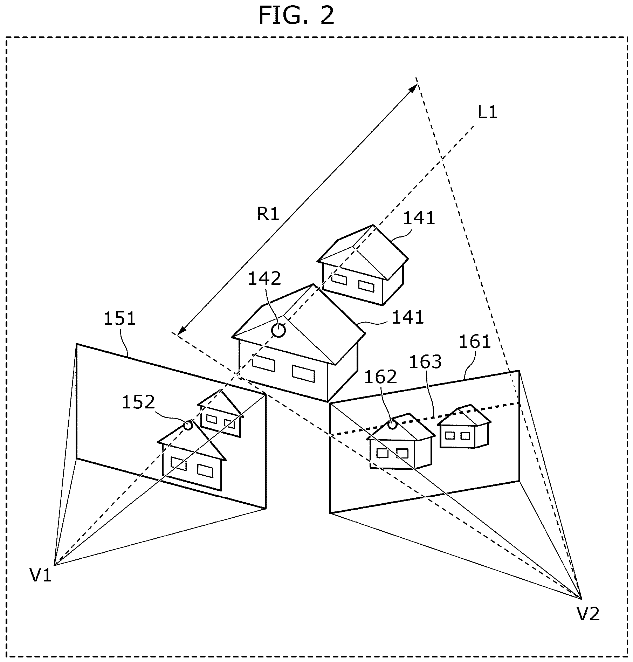

FIG. 2 is a diagram for describing feature point matching processing according to the embodiment.
[FIG. 3]

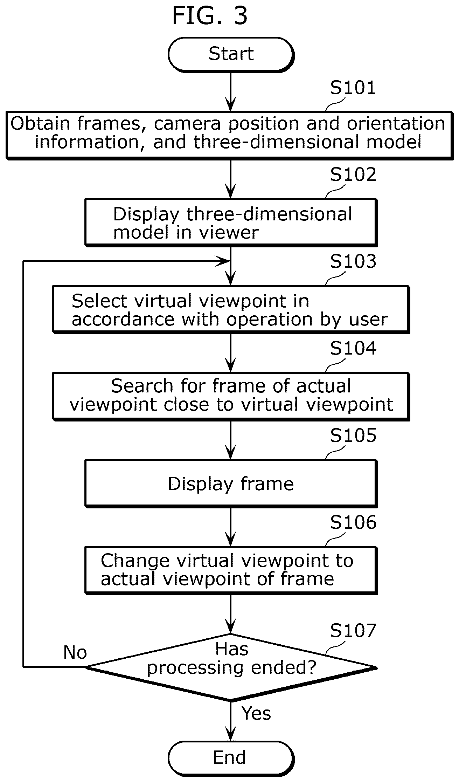

FIG. 3 is a flowchart illustrating the operation of a display device according to the embodiment.
[FIG. 4]

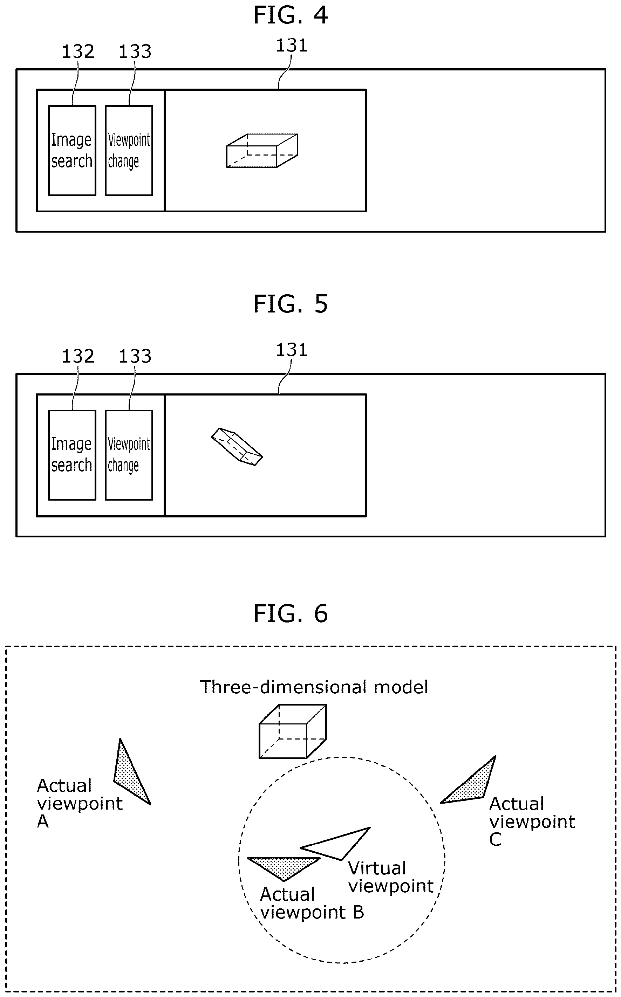

FIG. 4 is a diagram illustrating an example screen display of a display according to the embodiment.
[FIG. 5]
FIG. 5 is a diagram illustrating an example screen display after the viewpoint is changed according to the embodiment.
[FIG. 6]
FIG. 6 is a diagram illustrating an example of image search processing according to the embodiment.
[FIG. 7]

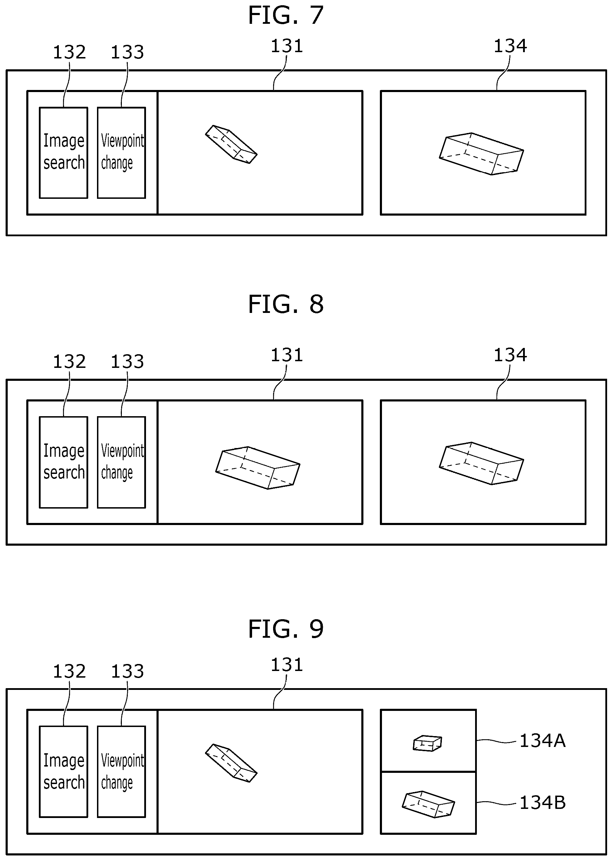

FIG. 7 is a diagram illustrating an example screen display after image searching according to the embodiment.

[FIG. 8]

FIG. 8 is a diagram illustrating an example screen display after viewpoint changing according to the embodiment.

[FIG. 9]

FIG. 9 is a diagram illustrating an example screen display when a plurality of frames are displayed according to the embodiment.

[FIG. 10]

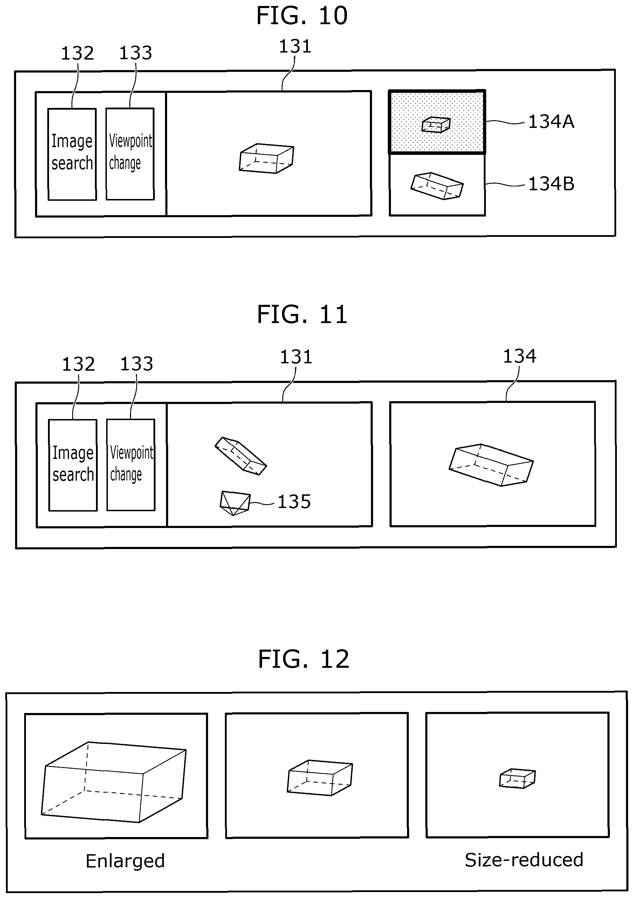

FIG. 10 is a diagram illustrating an example of frame selection by a user according to the embodiment.

[FIG. 11]

FIG. 11 is a diagram illustrating an example screen display when an actual viewpoint is displayed according to the embodiment.

[FIG. 12]

FIG. 12 is a diagram illustrating an example screen display of a plurality of three-dimensional models according to the embodiment.

[FIG. 13]

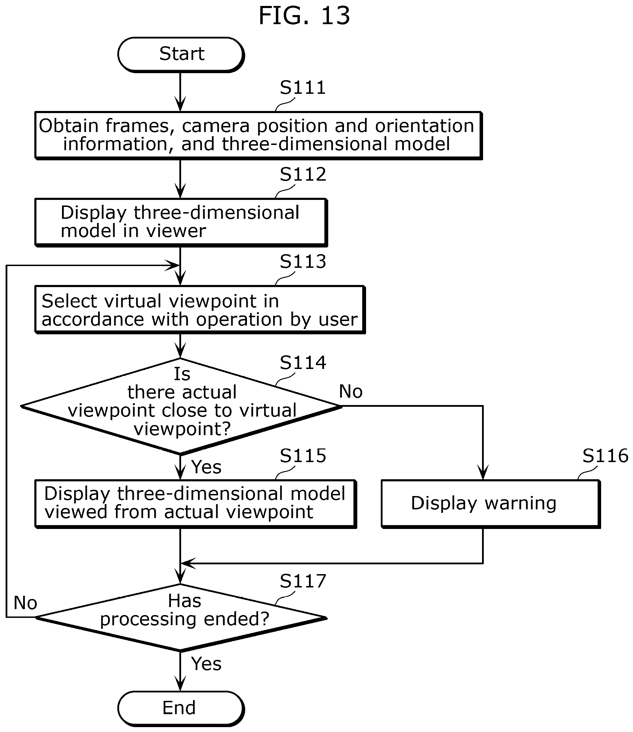

FIG. 13 is a flowchart illustrating the operation of a variation of the display device according to the embodiment.

[FIG. 14]

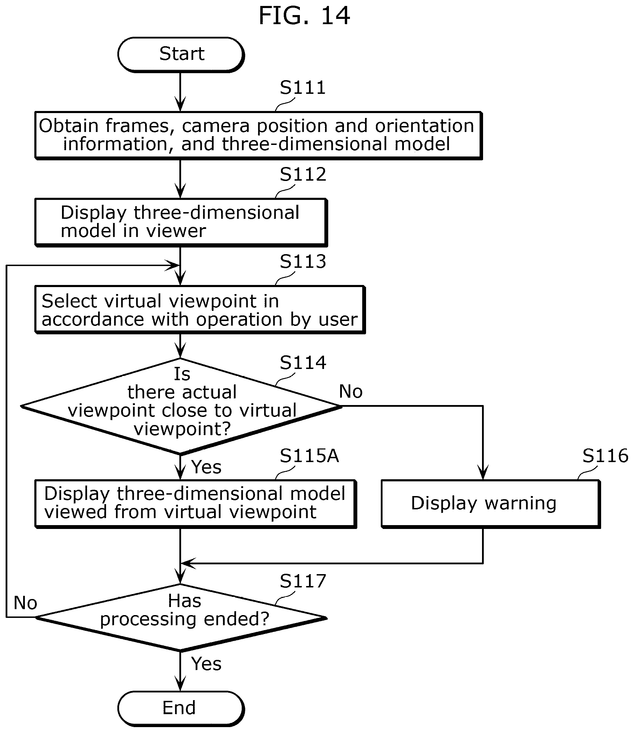

FIG. 14 is a flowchart illustrating the operation of a variation of the display device according to the embodiment.

[FIG. 15]

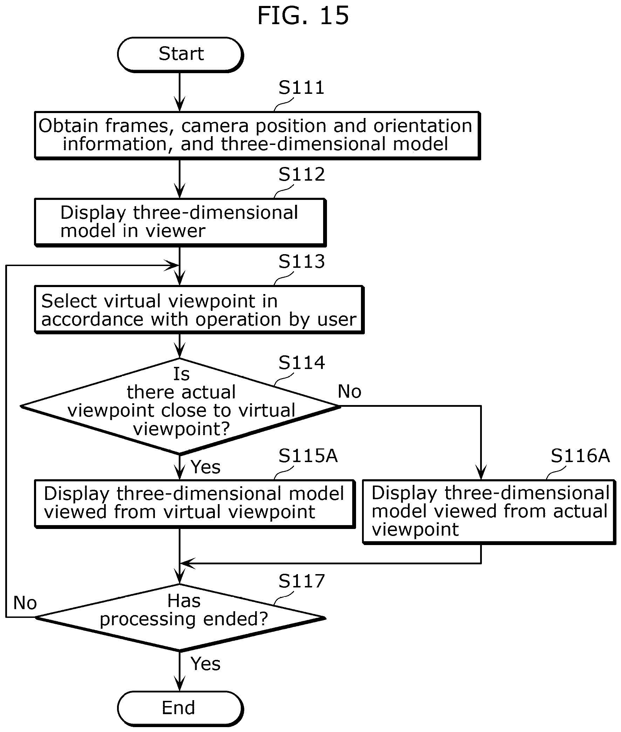

FIG. 15 is a flowchart illustrating the operation of a variation of the display device according to the embodiment.

[FIG. 16]

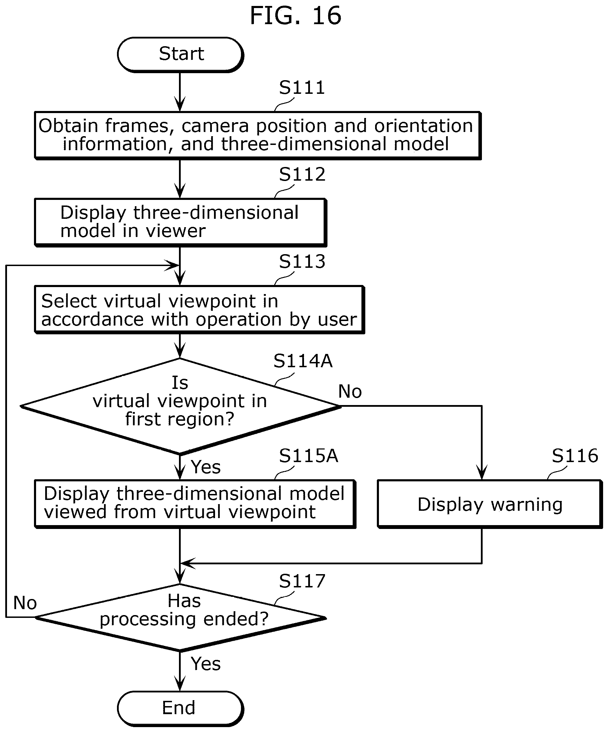

FIG. 16 is a flowchart illustrating the operation of a variation of the display device according to the embodiment.

[FIG. 17]

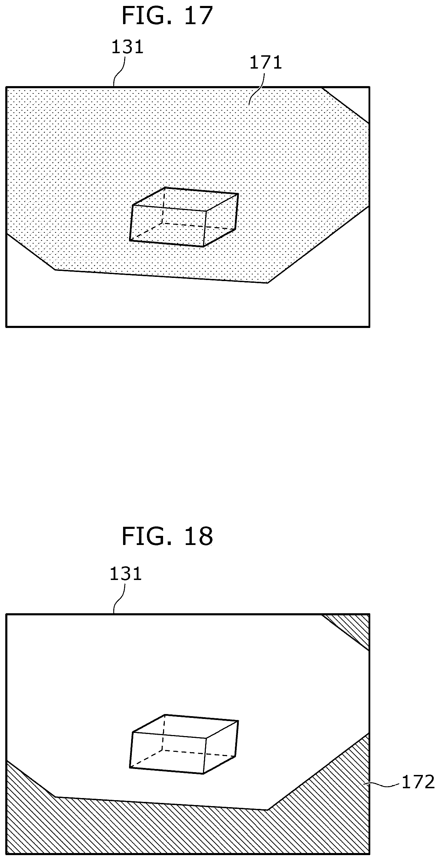

FIG. 17 is a diagram illustrating an example screen display of a first region according to the embodiment.

[FIG. 18]

FIG. 18 is a diagram illustrating an example screen display of a second region according to the embodiment.

[Description of Embodiments]

A viewer control method according to an aspect of the present disclosure is a viewer control method for controlling a viewer, and includes: determining a first region around an actual viewpoint of a frame, the frame having been generated by shooting an object from the actual viewpoint; and outputting information on the first region to the viewer. The viewer displays a three-dimensional model of the object viewed from a virtual viewpoint in the first region.

Accordingly, the viewer control method can display, in the viewer, a three-dimensional model viewed from a virtual viewpoint that is near the actual viewpoint. Therefore, the viewer control method can match (approximate) the virtual viewpoint to the actual viewpoint while providing a degree of freedom in selecting a virtual viewpoint in the viewer.

For example, the viewer control method may further include controlling the viewer not to display the three-dimensional model viewed from a virtual viewpoint in a second region other than the first region.

Accordingly, the viewer control method can prohibit the setting of a virtual viewpoint that is far from the actual viewpoint.

For example, the actual viewpoint may be represented in a first coordinate system, the three-dimensional model may be represented in a second coordinate system, and the viewer control method may further include: determining a second region around the actual viewpoint, in the first coordinate system; and converting the second region to the first region in the second coordinate system.

Accordingly, the viewer control method can determine whether the first region is included in the virtual viewpoint even when the coordinate system is different between the actual viewpoint and the three-dimensional model.

For example, the viewer control method may further include: obtaining a first position in the second coordinate system via an interface; and controlling the viewer to display the three-dimensional model viewed from the first position if the first position is provided within the first region.

Accordingly, the viewer control method can display, in the viewer, a three-dimensional model viewed from a virtual viewpoint that is near the actual viewpoint. Therefore, the viewer control method can match the virtual viewpoint to the actual viewpoint while providing a degree of freedom in selecting a virtual viewpoint in the viewer.

For example, the viewer control method may further include: obtaining a first position in the second coordinate system via an interface; and controlling the viewer to display warning information if the first position is provided outside the first region, the warning information indicating that the three-dimensional model viewed from the first position is not displayed.

Accordingly, the viewer control method can prohibit the setting of a user-specified virtual viewpoint that is far from the actual viewpoint.

For example, the viewer control method may further include controlling the viewer to display the three-dimensional model viewed from the actual viewpoint if the first position is provided outside of the first region.

Accordingly, when the virtual viewpoint specified by the user is far from the actual viewpoint, for example, in the case of an erroneous operation by the user, instead of simply prohibiting the setting of the virtual viewpoint, the viewer control method can display the three-dimensional model viewed from the actual viewpoint instead.

For example, the viewer control method may further include: determining an additional actual viewpoint of an additional frame generated by shooting the object from the additional viewpoint in the first coordinate system; obtaining a first position in the second coordinate system via an interface; controlling the viewer to display the three-dimensional model viewed from the actual viewpoint if the first position is closer to the actual viewpoint than to the additional actual viewpoint; and controlling the viewer to display the three-dimensional model viewed from the additional actual viewpoint if the first position is closer to the additional actual viewpoint than to the actual viewpoint.

Accordingly, when there are a plurality of frames, the viewer control method can display the three-dimensional model viewed from the actual viewpoint that is near the virtual viewpoint specified by the user. Therefore, operability can be improved in a case where there is a restriction in the viewpoint selection of the viewer.

For example, the viewer control method may further include controlling the viewer to display the first region.

Accordingly, the viewer control method can support the user's operation for setting an appropriate virtual viewpoint.

For example, the viewer control method may further include controlling the viewer to display a second region other than the first region. The three-dimensional model viewed from a virtual viewpoint in the second region need not be displayed by the viewer.

Accordingly, the viewer control method can support the user's operation for setting an appropriate virtual viewpoint.

For example, the first region may include actual viewpoints of frames including the frame, the frames each having been generated by shooting the object from a corresponding one of the actual viewpoints including the actual viewpoint. The three-dimensional model may be generated by performing feature point matching on the frames.

Accordingly, the viewer control method can set a virtual viewpoint that is near an actual viewpoint of the frames used in feature point matching. Here, a three-dimensional model viewed from a viewpoint that is near the actual viewpoint of the frames used in feature point matching is highly likely to have high accuracy. Furthermore, a three-dimensional model viewed from a viewpoint that is far from the actual viewpoint is highly likely to have data loss. Therefore, the viewer control method can display a highly accurate three-dimensional model.

For example, the first region may be a region within a predetermined distance from the actual viewpoint.

Accordingly, the viewer control method can display, in the viewer, a three-dimensional model viewed from a virtual viewpoint that is near the actual viewpoint.

For example, the viewer control method may further include displaying the frame.

Accordingly, the viewer control method can display a three-dimensional model viewed from a virtual viewpoint that is near the actual viewpoint of the frame to be displayed. Therefore, since the user can easily recognize the correspondence relationship between the frame and the three-dimensional model, even when the accuracy of the three-dimensional model is low, details of the object can be confirmed by referring to the frame.

For example, the first region may include first actual viewpoints of first frames including the frame, the first frames each having been generated by shooting the object from a corresponding one of the first actual viewpoints including the actual viewpoint. The viewer control method may further include: obtaining a specified viewpoint that is a virtual viewpoint specified based on an operation by a user; searching for a second frame shot from a first actual viewpoint that is near the specified viewpoint among the first actual viewpoints; and displaying the second frame.

Accordingly, the viewer control method can display the frame of an actual viewpoint that is near the viewpoint specified by the user. Therefore, since the user can easily recognize the correspondence relationship between the frame and the three-dimensional model, even when the accuracy of the three-dimensional model is low, details of the object can be confirmed by referring to the frame.

For example, the viewer control method may further include controlling the viewer to display the first actual viewpoint of the second frame.

Accordingly, the viewer control method can improve operability for the user.

For example, in the searching for the second frame, second frames including the second frame may be searched for, the second frames having been shot from second actual viewpoints that are first actual viewpoints that are near the specified viewpoint among the first actual viewpoints. In the displaying of the second frame, the second frames may be displayed. The viewer control method may further include controlling the viewer to cause a viewpoint of the three-dimensional model displayed by the viewer to be a second actual viewpoint of a second frame that is selected based on an operation by a user among the second frames.

Accordingly, the viewer control method can display, in the viewer, the three-dimensional model viewed from the actual viewpoint of the frame specified by the user among frames of actual viewpoints near the viewpoint specified by the user. Accordingly, operability for the user can be improved.

For example, the viewer control method may further include controlling the viewer to display three-dimensional models viewed from viewpoints having a predetermined relationship with the second actual viewpoint of the second frame selected.

Accordingly, the viewer control method can display, in the viewer, three-dimensional models viewed from viewpoints that are relevant to the actual viewpoint of the frame selected by the user. Therefore, convenience for the user can be improved.

For example, in the searching for the second frame, points included in the three-dimensional model viewed from the specified viewpoint may be projected onto each of the first frames, and the second frame may be determined based on a total number of points projected on each of the first frames.

Accordingly, the viewer control method can appropriately determine the frame of an actual viewpoint that is near the viewpoint specified by the user.

Furthermore, an information processing device according to an aspect of the present disclosure is an information processing device that controls a viewer, and includes: a processor; and memory. Using the memory, the processor: determines a first region around an actual viewpoint of a frame, the frame having been generated by shooting an object from the actual viewpoint; and outputs information on the first region to the viewer. The viewer displays a three-dimensional model of the object viewed from a virtual viewpoint in the first region.

Accordingly, the viewer control method can display, in the viewer, a three-dimensional model viewed from a virtual viewpoint that is near the actual viewpoint. Therefore, the viewer control method can match the virtual viewpoint to the actual viewpoint while providing a degree of freedom in selecting a virtual viewpoint in the viewer.

It is to be noted that these general or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

Hereinafter, embodiments will be specifically described with reference to the drawings. It is to be noted that each of the following embodiments indicate a specific example of the present disclosure. The numerical values, shapes, materials, constituent elements, the arrangement and connection of the constituent elements, steps, the processing order of the steps, etc., indicated in the following embodiments are mere examples, and thus are not intended to limit the present disclosure. Among the constituent elements described in the following embodiments, constituent elements not recited in any one of the independent claims will be described as optional constituent elements.

[EMBODIMENT]

[1. Configuration]

First, the configuration of a three-dimensional model display system according to the present embodiment will be described. FIG. 1 is a bloc diagram illustrating the configuration of the three-dimensional model display system according to the present embodiment. The three-dimensional model display system is a system that displays three-dimensional models in a viewer, and includes a plurality of imaging devices 101, three-dimensional model generation device 102, and display device 103.

Each of imaging devices 101 (cameras) shoots a subject (object) from a different viewpoint, and outputs a corresponding one of a plurality of shot frames to three-dimensional model generation device 102. The plurality of shot frames are also referred to as multi-viewpoint images. Furthermore, a frame is, in other words, an image.

It should be noted that the plurality of frames need not necessarily be shot by a plurality of imaging devices 101, and may be shot by a single imaging device 101 while moving. In other words, each of the plurality of frames is a frame shot (generated) by imaging device 100 from a viewpoint that differs from the others in at least one of the position or orientation of the imaging device 101.

Three-dimensional model generation device 102 includes camera position and orientation estimator 111 and three-dimensional model generator 112. Camera position and orientation estimator 111 generates, using the plurality of frames obtained using the plurality of imaging devices 101, camera position and orientation information indicating the positions and orientations (also called viewpoints) of imaging devices 101 at the time of shooting the frames. Here, the orientation of imaging device 101 indicates at least one of the shooting direction of imaging device 101, or the inclination of imaging device 101. The shooting direction of imaging device 101 is the direction of the optical axis of imaging device 101. The inclination of imaging device 101 is the rotation angle around the optical axis of imaging device 101 from a reference orientation.

Specifically, camera position and orientation estimator 111 estimates camera parameters of imaging devices 101, based on a plurality of frames obtained from imaging devices 101. Here, the camera parameters are parameters that indicate the characteristics of imaging devices 101, and include internal parameters including a focal point distance, an image center, etc. of imaging device 101, and external parameters indicating the position (more specifically, three-dimensional position) and orientation of imaging device 101.

It should be noted that the estimation method by which camera position and orientation estimator 111 estimates the positions and orientations of imaging devices 101 is not particularly limited. Camera position and orientation estimator 111 may estimate the positions and orientations of imaging devices 101 by using, for example, Visual-SLAM (Simultaneous Localization and Mapping) technology, Structure-From-Motion technology, or Iterative Closest Point (ICP) technology. Moreover, the positions and orientations of imaging devices 101 may be inputted by a user.

Specifically, camera position and orientation estimator 111 performs a feature point matching processing on the frames shot by imaging devices 101. Specifically, camera position and orientation estimator 111 extracts feature points from the frames, and extracts a set of similar points that are similar between a plurality of frames among the extracted feature points. Next, camera position and orientation estimator 111 estimates the positions and orientations of imaging devices 101 by using the extracted set of similar points.

Three-dimensional model generator 112 generates a three-dimensional model of the subject based on the frames and the camera position and orientation information (camera parameters). For example, three-dimensional model generator 112 generates a three-dimensional model using MVS (multi-view stereo). Three-dimensional model generator 112 first performs the feature point matching processing. FIG. 2 is a diagram for describing the feature point matching processing. As illustrated in FIG. 2, similar point 162 in frame 161 that is similar to point 152 (pixel) in frame 151 is searched for. Specifically, when matching for point 152 in frame 151 is performed between frame 151 and frame 161 in search range R1, epipolar line 163 in frame 161, which corresponds to straight line L1 passing through viewpoint V1 and point 152, extends from one end to the other end of frame 161. It should be noted that frame 151 is an image obtained from viewpoint V1, and frame 161 is an image obtained from viewpoint V2. Straight line L1 agrees with the shooting direction of imaging device 101 located at viewpoint V1. Point 152 corresponds to point 142 on subject 141.

As expressed by Equation 1 below, for a combination of frame I and frame J, three-dimensional model generator 112 calculates a normalized cross correlation (NCC) between small regions as N(I, J) to generate matching information that indicates a result of matching between frames.

[Math. 1]

$$N(I,J) = \frac{\sum (I_{xy} - \overline{I_{xy}}) \cdot (J_{xy} - \overline{J_{xy}})}{\sqrt{(I_{xy} - \overline{I_{xy}})^2} \sqrt{(J - \overline{J_{xy}})^2}}$$ (Equation 1)

Note that $I_{xy}$ and $J_{xy}$ are the pixel values in small regions of frame I and frame J. Additionally,

[Math. 2]

$$\overline{J_{xy}}$$

and

[Math. 3]

$$\overline{I_{xy}}$$

are the average values of the pixel values in the small regions of frame I and frame J, respectively.

Three-dimensional model generator 112 then generates a three-dimensional model by performing triangulation using the search result from the matching.

Display device 103 displays the three-dimensional model in a viewer using the camera position and orientation information and the three-dimensional model generated by three-dimensional model generation device 102. For example, display device 103 is a tablet terminal, a smartphone, or a personal computer.

It should be noted that the communication between imaging devices 101, three-dimensional model generation device 102, and display device 103 can be performed in any manner, such as wired communication or wireless communication. The communication may be directly performed between the devices or may be indirectly performed via another communication device, a server, etc. Furthermore, the transmission and reception of the frames, the camera position and orientation information, and the three-dimensional model may be performed in real time or may be recorded in an external storage device, such as a memory or a cloud server, and then output from the external storage device to three-dimensional model generation device 102 or display device 103.

Furthermore, the method of generating the frames, the camera position and orientation information, and the three-dimensional model is an example and is not limited to the method described above, and the frames, the camera position and orientation information, and the three-dimensional model can be generated in any manner. For example, in addition to or as an alternative to the frames, depth images (depth maps) obtained with a depth sensor, etc., or three-dimensional information obtained with radar measurement equipment, such as three-dimensional laser measurement equipment (LiDAR) or millimeter wave radar measurement equipment, may be used.

The three-dimensional model includes position information indicating a plurality of three-dimensional positions on the subject. For example, the three-dimensional model is a three-dimensional point cloud including a plurality of three-dimensional points indicating a plurality of three-dimensional positions. It should be noted that each three-dimensional point may have attribute information, such as color or reflectance. The three-dimensional model is not limited to the three-dimensional point, but may be a set of three-dimensional meshes, for example.

Display device 103 includes obtainer 121, storage 122, viewer controller 123, UI 124, and display 125.

Obtainer 121 obtains (receives) the frames shot by imaging devices 101, the camera position and orientation information, and the three-dimensional model from three-dimensional model generation device 102. Obtainer 121 is a communication interface for communicating with three-dimensional model generation device 102, for example.

Storage 122 stores the frames, the camera position and orientation information, and the three-dimensional model obtained by obtainer 121. It should be noted that storage 122 may store a processing result from a processing unit of display device 103. Furthermore, storage 122 may store a control program for making a processing circuit (processor) perform a processing of each processing unit of display device 103. Storage 122 is implemented by an HDD (Hard Disk Drive) or a flash memory, for example.

UI 124 is a user interface for accepting an operation by the user, and is a touch panel, a keyboard, or a mouse, for example. Display 125 is a display for displaying a screen. Viewer controller 123 displays, on display 125, a viewer that displays a three-dimensional model viewed from a virtual viewpoint.

It should be noted that, herein, viewer controller 123, UI 124, and display 125 need not be included in one apparatus. Furthermore, display device 103 may include some or all of the processing units included in three-dimensional model generation device 102.

[2. Operation]

Next, an operation of display device 103 will be described. FIG. 3 is a flowchart illustrating an operation of display device 103. Obtainer 121 first obtains a plurality of frames, camera position and orientation information, and a three-dimensional model from three-dimensional model generation device 102 (S101). Storage 122 saves the obtained frames, camera position and orientation information, and three-dimensional model. It should be noted that storage 122 may store, as header information of the frames, information for identifying imaging devices 101 that have shot the frames.

Viewer controller 123 then displays, on display 125, viewer 131 that displays the three-dimensional model viewed from a certain viewpoint (S102). FIG. 4 is a diagram illustrating an example display on display 125.

A virtual viewpoint is then selected in accordance with an operation on UI 124 by the user (S103). For example, the user selects a virtual viewpoint by performing a tap or slide operation on viewer 131. Specifically, scaling, rotation, or translation, etc., of the three-dimensional model is performed. It should be noted that the method of viewpoint operation by the user is not limited to this, and any well-known method can be used, such as operating an operation button or operation bar displayed on display 125. FIG. 5 is a diagram illustrating an example display after the viewpoint is changed.

Viewer controller 123 then searches for a frame of a viewpoint close to the virtual viewpoint of the three-dimensional model displayed on the viewer (S104). For example, an image search is performed by the user tapping image search button 132 displayed on display 125 illustrated in FIG. 5. It should be noted that the operation of starting the image search is not limited to this, and any method can be used. Furthermore, the image search may automatically occur without an operation by the user. For example, the image search may occur when the operation of viewpoint change by the user does not occur for a predetermined time.

FIG. 6 is a diagram illustrating an example of an image searching processing. Viewer controller 123 compares the current virtual viewpoint with a plurality of actual viewpoints that are positions and orientations of a plurality of imaging devices 101 indicated by the camera position and orientation information stored in storage 122, and searches for an actual viewpoint that is close to the virtual viewpoint. For example, in the example illustrated in FIG. 6, among actual viewpoints A, B, and C, actual viewpoint B close to the virtual viewpoint is selected.

Specifically, viewer controller 123 searches for an actual viewpoint close to the virtual viewpoint based on the differences in position (such as x, y, and z coordinates) between the virtual viewpoint and the actual viewpoints and the differences in direction of the line of sight (shooting direction) between the virtual viewpoint and the actual viewpoints. For example, from among the plurality of actual viewpoints, viewer controller 123 extracts an actual viewpoint for which the difference in position is less than a preset first threshold and the difference in direction of the line of sight is less than a preset second threshold. For example, the Euclidean distance may be used as the difference in position, and the cosine similarity may be used as the difference in direction of the line of sight. Furthermore, viewer controller 123 may reduce the actual viewpoints based on the difference in direction of line of sight and then determine the differences in position for the reduced actual viewpoints. Furthermore, viewer controller 123 may compare weighted sums of the differences in position and the differences in direction of line of sight with a threshold, rather than comparing the differences in position and the differences in direction of line of sight with the respective thresholds.

It should be noted that viewer controller 123 need not use the difference in direction of the line of sight, and may use only the difference in position. Here, the plurality of frames are frames used for generation of the three-dimensional model of the subject, and are frames obtained by shooting the subject from a plurality of directions. Therefore, the directions of line of sight of the actual viewpoints are generally toward the subject. Furthermore, the virtual viewpoint to be selected also faces the direction of the three-dimensional model (subject), so that if the position of the virtual viewpoint is close to the position of an actual viewpoint, the direction of the line of sight of the virtual viewpoint is also likely to be close to the direction of the line of sight of the actual viewpoint. Therefore, a certain level of accuracy can be ensured even when only the difference in position is used.

Furthermore, in determination of the difference in position, different thresholds may be used for a depth direction (a direction connecting the viewpoint and the subject) and an up-and-down or left-and-right direction (a direction perpendicular to the depth direction). For example, comparison between the three-dimensional model and the frame is easier when the positions are different in the depth direction (distance to the subject) than when the positions are different in the up-and-down or left-and-right direction. Therefore, the threshold for the depth direction may be smaller than the threshold for the up-and-down or left-and-right direction. It should be noted that the threshold for the depth direction may be greater than the threshold for the up-and-down or left-and-right direction. Furthermore, different thresholds may be used for the up-and-down direction and the left-and-right direction. Furthermore, settings of these thresholds for different directions may be switched according to the subject or application or may be switched according to user settings.

As an alternative method, viewer controller 123 may project each of a plurality of three-dimensional points forming the three-dimensional model viewed from the virtual viewpoint, that is, the three-dimensional model displayed on the viewer onto the frames, and extract, as a frame of the actual viewpoint close to the virtual viewpoint, a frame onto which the largest number of three-dimensional points have been projected or a frame onto which a larger number of three-dimensional points than a threshold have been projected.

Viewer controller 123 displays the extracted frame of the actual viewpoint on display 125 (S105). FIG. 7 is a diagram illustrating an example display after the image search. As illustrated in FIG. 7, frame 134 of the actual viewpoint close to the virtual viewpoint of the three-dimensional model displayed in viewer 131 is displayed on display 125.

Viewer controller 123 then change the virtual viewpoint of the three-dimensional model to the actual viewpoint of the displayed frame (S106). That is, viewer controller 123 displays a three-dimensional model viewed from the actual viewpoint of frame 134 in viewer 131. For example, the viewpoint change is performed by the user tapping viewpoint change button 133 displayed on display 125 illustrated in FIG. 7. It should be noted that the operation for viewpoint change is not limited to this, and any manner can be used. Furthermore, the viewpoint change may automatically occur without an operation by the user.

FIG. 8 is a diagram illustrating an example display after the viewpoint change. As illustrated in FIG. 8, the virtual viewpoint of the three-dimensional model displayed in viewer 131 has been changed to the actual viewpoint of frame 134.

Note that the virtual viewpoint to be changed to the actual viewpoint need not perfectly agree with the actual viewpoint and may be a viewpoint near the actual viewpoint. Here, the viewpoint near the actual viewpoint means a viewpoint for which the differences in position and direction of the line of sight from the actual viewpoint are less than a preset threshold.

When the display processing for the three-dimensional model has not ended (No in S107), if the virtual viewpoint is changed by the subsequent operation by the user (S103), the processings of step S104 and the subsequent steps are performed. That is, the processings of steps S103 to S106 are repeated. When the display processing for the three-dimensional model has ended (Yes in S107), such as when an operation of ending the processing is performed by the user, viewer controller 123 ends the processing.

Display device 103 according to this embodiment displays a frame of an actual viewpoint close to the virtual viewpoint of the displayed three-dimensional model in the manner described above. In this way, when the resolution of the three-dimensional model is inadequate, for example, the user can check the detailed configuration of the subject by referring to the frame. In addition, display device 103 can make the viewpoints of the frame and the three-dimensional model coincide with each other. As a result, the user can easily recognize the correspondence between the frame and the three-dimensional model. Therefore, the convenience to the user can be improved.

[3. Variations]

It should be noted that, in step S104, when there are a plurality of actual viewpoints close to the virtual viewpoint, a plurality of frames may be displayed in step S105. FIG. 9 is a diagram illustrating an example display in this case. As illustrated in FIG. 9, display 125 displays a plurality of frames 134A and 134B of a plurality of actual viewpoints close to the virtual viewpoint.

Furthermore, in this case, in step S106, the user selects, from the plurality of frames, a frame corresponding to an actual viewpoint to be set at the virtual viewpoint. FIG. 10 is a diagram illustrating an example of the selection by the user. In the example illustrated in FIG. 10, for example, the user selects frame 134A by tapping on frame 134A. Furthermore, a three-dimensional model viewed from the actual viewpoint of frame 134A is displayed in viewer 131. Furthermore, in the state illustrated in FIG. 10, the viewpoint of the three-dimensional model displayed in viewer 131 may be changed to the actual viewpoint of frame 134B by tapping on frame 134B.

It should be noted that, in this case again, the virtual viewpoint of the three-dimensional model may be automatically changed, rather than by the user selecting frame 134A or 134B. For example, a three-dimensional model viewed from the actual viewpoint of frame 134A and a three-dimensional model viewed from the actual viewpoint of frame 134B may be alternately displayed at predetermined time intervals. Alternatively, display 125 may display an additional viewer and separately display the three-dimensional model viewed from the actual viewpoint of frame 134A and the three-dimensional model viewed from the actual viewpoint of frame 134B in viewer 131 and the additional viewer.

Furthermore, the actual viewpoint of frame 134 may be displayed in viewer 131, in addition to the three-dimensional model. FIG. 11 is a diagram illustrating an example display in this case. As illustrated in FIG. 11, display 125 displays actual viewpoint 135 of frame 134 in viewer 131. In this case, the viewpoint of the three-dimensional model displayed in the viewer may be changed to actual viewpoint 135 (that is, the viewpoint of frame 134) by the user selecting (tapping on, for example) actual viewpoint 135. It should be noted that when a plurality of frames 134A and 134B are displayed as in the example illustrated in FIG. 10, the actual viewpoint corresponding to frame 134A and the actual viewpoint corresponding to frame 134B may be displayed in viewer 131.

Furthermore, when the viewpoint change is performed in step S106, in addition to the three-dimensional model viewed from the actual viewpoint of frame 134, a plurality of three-dimensional models viewed from a plurality of viewpoints that are in a predetermined relationship with the actual viewpoint may be displayed. FIG. 12 is a diagram illustrating an example display in this case. In the example illustrated in FIG. 12, in addition to the three-dimensional model viewed from the actual viewpoint of frame 134, an enlarged image of the three-dimensional model and a size-reduced image of the three-dimensional model are displayed. It should be noted that not only the enlarged or size-reduced image but also a three-dimensional model obtained by rotating in a predetermined direction or translating the three-dimensional model viewed from the actual viewpoint of frame 134 may be displayed. Furthermore, an orthorectified image or a plurality of images orthorectified in a plurality of directions (such as upward, sideward, or downward) may be displayed.

Furthermore, although the image search (S103) and the viewpoint change (S106) are performed by an operation by the user in the above description, the image search and the viewpoint change may automatically occur. FIG. 13 is a flowchart illustrating a processing of display device 103 in this case.

Steps S111 to S113 are the same as steps S101 to S103 illustrated in FIG. 3, for example. After the virtual viewpoint is selected (S113), viewer controller 123 determines whether there is a frame of an actual viewpoint close to the selected virtual viewpoint (whether a frame of an actual viewpoint close to the selected virtual viewpoint is stored in storage 122) (S114). It should be noted that the method of determining an actual viewpoint close to the virtual viewpoint is the same as the method used in step S104 described above.

It should be noted that when a first coordinate system for the actual viewpoint indicated by the camera position and orientation information and a second coordinate system for the three-dimensional model and the virtual viewpoint are different, viewer controller 123 may transform the actual viewpoint represented in the first coordinate system into a viewpoint in the second coordinate system and determine an actual viewpoint close to the virtual viewpoint based on the actual viewpoint in the second coordinate system and the virtual viewpoint in the second coordinate system. Alternatively, viewer controller 123 may transform the virtual viewpoint represented in the second coordinate system into a viewpoint in the first coordinate system and determine an actual viewpoint close to the virtual viewpoint based on the virtual viewpoint in the first coordinate system and the actual viewpoint in the first coordinate system.

When there is a frame of an actual viewpoint close to the selected virtual viewpoint (Yes in S114), viewer controller 123 displays a three-dimensional model viewed from the actual viewpoint in viewer 131 (S115). Furthermore, viewer controller 123 displays a frame shot from the actual viewpoint on display 125. It should be noted that viewer controller 123 need not display the frame on display 125. Furthermore, when there are a plurality of actual viewpoints close to the virtual viewpoint, viewer controller 123 may display, in viewer 131, a three-dimensional model viewed from the actual viewpoint that is the closest to the virtual viewpoint, for example.

On the other hand, when there is no frame of an actual viewpoint close to the selected virtual viewpoint (No in S114), viewer controller 123 displays a warning on display 125 and displays no three-dimensional model in viewer 131 (S116). For example, the warning indicates that no three-dimensional model is displayed since there is no frame shot from an actual viewpoint close to the virtual viewpoint. It should be noted that viewer controller 123 may display, on display 125, the warning that indicates that there is no frame shot from an actual viewpoint close to the selected virtual viewpoint while displaying, in viewer 131, a three-dimensional model viewed from the selected virtual viewpoint.

When the display processing for the three-dimensional model has not ended (No in S117), if the virtual viewpoint is changed by the subsequent operation by the user (S113), the processings of step S114 and the subsequent steps are performed. That is, the processings of steps S113 to S116 are repeated. When the display processing for the three-dimensional model has ended (Yes in S117), viewer controller 123 ends the processing.

In the processing described above, although a three-dimensional model is displayed when the virtual viewpoint is close to an actual viewpoint, no three-dimensional model is displayed when the virtual viewpoint is far from any actual viewpoint. That is, the viewpoint operation by the user is restricted to virtual viewpoints close to actual viewpoints. In this way, a virtual viewpoint for which there is no corresponding frame can be prohibited from being selected. Furthermore, when three-dimensional models are generated from a plurality of frames, a three-dimensional model viewed from a virtual viewpoint for which there is not corresponding frame, that is, a virtual viewpoint far from any actual viewpoint, can have low accuracy. Therefore, the processing described above can prevent a three-dimensional model having low accuracy from being displayed.

Furthermore, when there is an actual viewpoint close to the virtual viewpoint, a three-dimensional model viewed from the virtual viewpoint may be displayed in viewer 131. FIG. 14 is a flowchart illustrating a processing of display device 103 in this case. The processing illustrated in FIG. 14 differs from the processing illustrated in FIG. 13 in that step S115 is replaced with step S115A. When there is an actual viewpoint close to the selected virtual viewpoint (Yes in S114), viewer controller 123 displays, in viewer 131, a three-dimensional model viewed from the selected virtual viewpoint (S115A).

In the processing described above, the viewpoint operation by the user is restricted to virtual viewpoints close to actual viewpoints. In this way, a virtual viewpoint for which there is no corresponding frame can be prohibited from being selected. Furthermore, a three-dimensional model that has low accuracy can be prevented from being displayed. Furthermore, a virtual viewpoint that does not perfectly agree with an actual viewpoint can be set, so that the restriction on the viewpoint operation can be eased compared with the processing illustrated in FIG. 13.

Furthermore, when there is no actual viewpoint close to the virtual viewpoint, a three-dimensional model viewed from an actual viewpoint may be displayed in viewer 131. FIG. 15 is a flowchart illustrating a processing of display device 103 in this case. The processing illustrated in FIG. 15 differs from the processing illustrated in FIG. 14 in that step S116 is replaced with step S116A. When there is no actual viewpoint close to the selected virtual viewpoint (No in S114), viewer controller 123 displays, in viewer 131, a three-dimensional model viewed from an actual viewpoint (S116A). For example, viewer controller 123 displays, in viewer 131, a three-dimensional model viewed from an actual viewpoint that is the closest to the selected virtual viewpoint.

In the processing described above, the viewpoint operation by the user is restricted to virtual viewpoints close to actual viewpoints. In this way, a virtual viewpoint for which there is no corresponding frame can be prohibited from being selected. Furthermore, a three-dimensional model that has low accuracy can be prevented from being displayed. In addition, since cases where no three-dimensional model is displayed do not occur, the operability of the user can be improved.

The processings illustrated in FIG. 13 to FIG. 15 may be combined. For example, a three-dimensional model viewed from the virtual viewpoint may be displayed when the difference in position and/or direction of the line of sight between the virtual viewpoint and the actual viewpoint is less than a first threshold, a three-dimensional model viewed from the actual viewpoint (such as the actual viewpoint that is the closest to the virtual viewpoint) may be displayed when the difference described above is equal to or more than the first threshold and is less than a second threshold that is greater than the first threshold, and an warning may be displayed and no three-dimensional model may be displayed when the difference described above is equal to or more than the second threshold.

Furthermore, as the determination of whether there is an actual viewpoint close to the selected virtual viewpoint in step S114, viewer controller 123 may determine whether the selected virtual viewpoint is included in a first region around an actual viewpoint. FIG. 16 is a flowchart illustrating a processing of display device 103 in this case. The processing illustrated in FIG. 16 differs from the processing illustrated in FIG. 14 in that step S114 is replaced with step S114A.

In this case, the first region is determined at any timing after the frames, the camera position and orientation information, and the three-dimensional models are obtained, for example. For example, the first region is a set of three-dimensional regions each of which is within a predetermined distance from one of a plurality of actual viewpoints. Specifically, for example, a region around each actual viewpoint is determined in the same manner as used in step S104 described above, and the first region is formed by the determined regions.

It should be noted that when the first coordinate system for the actual viewpoint indicated by the camera position and orientation information and the second coordinate system for three-dimensional model and the virtual viewpoint are different, viewer controller 123 may determine a second region around the actual viewpoint represented in the first coordinate system and transform the second region represented in the first coordinate system into the first region in the second coordinate system. In this way, viewer controller 123 can determine whether the virtual viewpoint represented in the second coordinate system is included in the first region represented in the second coordinate system.

Furthermore, the predetermined distance for prescribing the first region need not be the same in a plurality of directions. For example, the distance in a first direction (a direction from the actual viewpoint to the three-dimensional model, for example) may be greater than the distance in a second direction that is perpendicular to the first direction. Even if the position of the virtual viewpoint is far from the actual viewpoint in the direction from the actual viewpoint to the three-dimensional model, the user is less likely to recognize the difference between the contents of the three-dimensional model viewed from the virtual viewpoint and the contents of the frame shot from the actual viewpoint.

As illustrated in FIG. 16, after a virtual viewpoint is selected (S113), viewer controller 123 determines whether the selected virtual viewpoint is included in the first region (S114A). When the selected virtual viewpoint is included in the first region (Yes in S114A), viewer controller 123 displays, in viewer 131, a three-dimensional model viewed from the selected virtual viewpoint (S115A). On the other hand, when the selected virtual viewpoint is not included in the first region (No in S114A), a warning is displayed on display 125, and no three-dimensional model is not displayed in viewer 131 (S116).

Furthermore, in this case, viewer controller 123 may display first region 171 in viewer 131. FIG. 17 is a diagram illustrating an example of first region 171 displayed. This allows the user to grasp first region 171 that can be selected as a virtual viewpoint, so that the operability of the user can be improved.

Alternatively, viewer controller 123 may display, in viewer 131, a second region other than first region 171. FIG. 18 is a diagram illustrating an example of second region 172 displayed. This allows the user to grasp second region 172 that cannot be selected as a virtual viewpoint, so that the operability of the user can be improved.

Furthermore, although the processing illustrated in FIG. 16 is an example modification of the processing illustrated in FIG. 14, similar modifications can be made to the examples in FIG. 3, FIG. 13, or FIG. 15 or other examples.

[4. Conclusion]

As described above, display apparatus 103 (viewer controller 123) according to the present embodiment is a viewer control device for controlling viewer 131, and determines a first region (for example, first region 171) around an actual viewpoint of a frame, the frame having been generated by shooting an object from the actual viewpoint; and outputs information on the first region to viewer 131 (or display 125). Viewer 131 (or display 125) displays a three-dimensional model of the object viewed from a virtual viewpoint in the first region (for example, S115A in FIG. 16).

Accordingly, display device 103 can display, in viewer 131, a three-dimensional model viewed from a virtual viewpoint that is near the actual viewpoint. Therefore, display device 103 can match the virtual viewpoint to the actual viewpoint while providing a degree of freedom in selecting a virtual viewpoint in viewer 131.

For example, information on the first region includes information indicating a center position of the first region and information indicating a distance from the center position up to a periphery of the first region. It should be noted that the information on the first region is not limited to the aforementioned information, as long as it is information that can identify the first region.

For example, display device 103 further controls viewer 131 not to display the three-dimensional model viewed from a virtual viewpoint in a second region (for example, second region 172) other than the first region. Accordingly, display device 103 can prohibit the setting of a virtual viewpoint that is far from the actual viewpoint. It should be noted that the second region can also be represented using the same information as the first region described above.

For example, the actual viewpoint is represented in a first coordinate system, and the three-dimensional model is represented in a second coordinate system. Display device 103 further determines a second region around the actual viewpoint, in the first coordinate system; and converts the second region to the first region in the second coordinate system. It should be noted that the second region can also be represented using the same information as the first region described above.

Accordingly, display device 103 can determine whether the first region is included in the virtual viewpoint even when the coordinate system is different between the actual viewpoint and the three-dimensional model.

For example, display device 103 further obtains a first position (virtual viewpoint) in the second coordinate system via an interface (for example, UI 124); and controls viewer 131 to display the three-dimensional model viewed from the first position if the first position is provided within the first region.

Accordingly, display device 103 can display, in viewer 131, a three-dimensional model viewed from a virtual viewpoint that is near the actual viewpoint. Therefore, display device 103 can match the virtual viewpoint to the actual viewpoint while providing a degree of freedom in selecting a virtual viewpoint in viewer 131.

For example, display device 103 further obtains a first position (virtual viewpoint) in the second coordinate system via an interface (for example, UI 124); and controls viewer 131 to display warning information if the first position is provided outside the first region (for example, S116 in FIG. 16), the warning information indicating that the three-dimensional model viewed from the first position is not displayed. It should be noted that the warning information may be displayed only when there is a operation input to UI 124. Accordingly, display device 103 can prompt the user to make the appropriate position input, before the user's erroneous operation input is finalized.

Accordingly, display device 103 can prohibit the setting of a user-specified virtual viewpoint that is far from the actual viewpoint.

For example, display device 103 further controls viewer 131 to display the three-dimensional model viewed from the actual viewpoint if the first position is provided outside of the first region (for example S116A in FIG. 15).

Accordingly, when the virtual viewpoint specified by the user is far from the actual viewpoint, for example, in the case of an erroneous operation by the user, instead of simply prohibiting the setting of the virtual viewpoint, display device 103 can display the three-dimensional model viewed from the actual viewpoint instead.

For example, display device 103 further determines an additional actual viewpoint of an additional frame generated by shooting the object from the additional viewpoint in the first coordinate system; obtains a first position in the second coordinate system via an interface (for example, UI 124); controls viewer 131 to display the three-dimensional model viewed from the actual viewpoint if the first position is closer to the actual viewpoint than to the additional actual viewpoint; and controls viewer 131 to display the three-dimensional model viewed from the additional actual viewpoint if the first position is closer to the additional actual viewpoint than to the actual viewpoint. In other words, display device 103 controls viewer 131 to display the three-dimensional model viewed from an actual viewpoint that is nearest the first position, among the plurality of actual viewpoints of a plurality of frames.

Accordingly, when there are a plurality of frames, display device 103 can display the three-dimensional model viewed from the actual viewpoint that is near the virtual viewpoint specified by the user. Therefore, operability can be improved in a case where there is a restriction in the viewpoint selection in viewer 131.

For example, as illustrated in FIG. 17, display device 103 can further control viewer 131 to cause viewer 131 to display first region 171. Accordingly, display device 103 can support the user's operation for setting an appropriate virtual viewpoint.

For example, as illustrated in FIG. 18, display device 103 further controls viewer 131 to cause viewer 131 to display second region 172 other than first region 171. The three-dimensional model viewed from a virtual viewpoint in second region 172 is not displayed by viewer 131. Accordingly, display device 103 can support the user's operation for setting an appropriate virtual viewpoint.

For example, the first region includes actual viewpoints of frames including the frame, the frames having been generated by shooting the object from the actual viewpoints including the actual viewpoint. The three-dimensional model is generated by feature point matching on the frames.

Accordingly, display device 103 can set a virtual viewpoint that is near an actual viewpoint of the frames used in feature point matching. Here, a three-dimensional model viewed from a viewpoint that is near the actual viewpoint of the frames used in feature point matching is highly likely to have high accuracy. Furthermore, a three-dimensional model viewed from a viewpoint that is far from the actual viewpoint is highly likely to have data loss. Therefore, display device 103 can display a highly accurate three-dimensional model.

For example, the first region is a region within a predetermined distance from the actual viewpoint. Accordingly, display device 103 can display, in viewer 131, a three-dimensional model viewed from a virtual viewpoint that is near the actual viewpoint.

For example, display device 103 further displays frame 134. Accordingly, display device 103 can display a three-dimensional model viewed from a virtual viewpoint that is near the actual viewpoint of frame 134 to be displayed. Therefore, since the user can easily recognize the correspondence relationship between the frame and the three-dimensional model, even when the accuracy of the three-dimensional model is low, details of the object can be confirmed by referring to frame 134.

For example, the first region includes first actual viewpoints of first frames including the frame, the first frames each having been generated by shooting the object from a corresponding one of the first actual viewpoints including the actual viewpoint. Display device 103 further obtains a specified viewpoint that is a virtual viewpoint specified based on an operation by a user; searches for a second frame shot from a first actual viewpoint that is near the specified viewpoint among the first actual viewpoints; and displays the second frame.

Accordingly, display device 103 can display the frame of an actual viewpoint that is near the viewpoint specified by the user. Therefore, since the user can easily recognize the correspondence relationship between the frame and the three-dimensional model, even when the accuracy of the three-dimensional model is low, details of the object can be confirmed by referring to the frame.

Furthermore, as illustrated in FIG. 11, display device 103 further controls viewer 131 to cause viewer 131 to a first actual viewpoint (actual viewpoint 135) of the second frame. Accordingly, display device 103 can improve operability for the user.

For example, in the searching for the second frame, second frames including the second frame are searched for, the second frames having been shot from second actual viewpoints that are first actual viewpoints that are near the specified viewpoint among the first actual viewpoints, and in the displaying of the second frame, the second frames (for example, frames 134A and 134B illustrated in FIG. 9) are displayed. Display device 103 further controls viewer 131 to cause a viewpoint of the three-dimensional model displayed by viewer 131 to be a second actual viewpoint of a second frame that is selected based on an operation by a user among the second frames (for example, FIG. 10).

Accordingly, display device 103 can display, in viewer 131, the three-dimensional model viewed from the actual viewpoint of the frame specified by the user among frames of actual viewpoints near a viewpoint specified by the user. Accordingly, operability for the user can be improved.

For example, as illustrated in FIG. 12, display device 103 further controls viewer 131 to cause viewer 131 to display three-dimensional models viewed from viewpoints having a predetermined relationship with the second actual viewpoint of the second frame selected. Accordingly, display device 103 can display, in viewer 131, three-dimensional models viewed from viewpoints that are relevant to the actual viewpoint of the frame selected by the user. Therefore, convenience for the user can be improved.

For example, in the searching for the second frame, display device 103 projects points included in the three-dimensional model viewed from the specified viewpoint onto each of the first frames, and determines the second frame based on a total number of points projected on each of the first frames. Accordingly, display device 103 can appropriately determine the frame of an actual viewpoint that is near the viewpoint specified by the user.

Furthermore, the above-described process may be executed by an information processing device (for example, viewer controller 123) included in display device 103.

For example, the display device or the information processing device includes a processor and memory, and the processor performs the above-described process using the memory.

Although a display device, and the like, according to embodiments of the present disclosure have been described above, the present disclosure is not limited to these embodiments.

Note that each of the processors included in the display device, and the like, according to the above embodiments is typically implemented as a large-scale integrated (LSI) circuit, which is an integrated circuit (IC). These may take the form of individual chips, or may be partially or entirely packaged into a single chip.

Such IC is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

Moreover, in the above embodiments, the constituent elements may be implemented as dedicated hardware or may be realized by executing a software program suited to such constituent elements. Alternatively, the constituent elements may be implemented by a program executor such as a CPU or a processor reading out and executing the software program recorded in a recording medium such as a hard disk or a semiconductor memory.

Furthermore, the present disclosure may be implemented as a viewer control method, and the like, that is executed by a display device, and the like.

Also, the divisions of the functional blocks shown in the block diagrams are mere examples, and thus a plurality of functional blocks may be implemented as a single functional block, or a single functional block may be divided into a plurality of functional blocks, or one or more functions may be moved to another functional block. Also, the functions of a plurality of functional blocks having similar functions may be processed by single hardware or software in a parallelized or time-divided manner.

Also, the processing order of executing the steps shown in the flowcharts is a mere illustration for specifically describing the present disclosure, and thus may be an order other than the shown order. Also, one or more of the steps may be executed simultaneously (in parallel) with another step.

A display device, and the like, according to one or more aspects have been described above based on the embodiments, but the present disclosure is not limited to these embodiments. The one or more aspects may thus include forms achieved by making various modifications to the above embodiments that can be conceived by those skilled in the art, as well forms achieved by combining constituent elements in different embodiments, without materially departing from the spirit of the present disclosure.

[Industrial Applicability]

The present disclosure can be applied to display device that displays a viewer that displays a three-dimensional model.

[Reference Signs List]

| 101 | imaging device |
| 102 | three-dimensional model generation device |

| 103 | display device |
|---|---|
| 111 | camera position and orientation estimator |
| 112 | three-dimensional model generator |
| 121 | obtainer |
| 122 | storage |
| 123 | viewer controller |
| 124 | UI |
| 125 | display |
| 131 | viewer |
| 132 | image search button |
| 133 | viewpoint change button |
| 134, 134A, 134B | frame |
| 135 | actual viewpoint |
| 141 | subject |
| 142, 152 | point |
| 151, 161 | frame |
| 162 | similar point |
| 163 | epipolar line |
| 171 | first region |
| 172 | second region |

**Claims**

1. A viewer control method for controlling a viewer, the viewer control method comprising:

   determining a first region around an actual viewpoint of a frame, the frame having been generated by shooting an object from the actual viewpoint; and
   outputting information on the first region to the viewer, wherein
   the viewer displays a three-dimensional model of the object viewed from a virtual viewpoint in the first region.

2. The viewer control method according to claim 1, further comprising:
   controlling the viewer not to display the three-dimensional model viewed from a virtual viewpoint in a second region other than the first region.

3. The viewer control method according to claim 1, wherein the actual viewpoint is represented in a first coordinate system,

   the three-dimensional model is represented in a second coordinate system, and
   the viewer control method further comprises:

      determining a second region around the actual viewpoint, in the first coordinate system; and
      converting the second region to the first region in the second coordinate system.

4. The viewer control method according to claim 3, further comprising:

   obtaining a first position in the second coordinate system via an interface; and
   controlling the viewer to display the three-dimensional model viewed from the first position if the first position is provided within the first region.

5. The viewer control method according to claim 3, further comprising:

   obtaining a first position in the second coordinate system via an interface; and
   controlling the viewer to display warning information if the first position is provided outside the first region, the warning information indicating that the three-dimensional model viewed from the first position is not displayed.

6. The viewer control method according to claim 4, further comprising:
   controlling the viewer to display the three-dimensional model viewed from the actual viewpoint if the first position is provided outside of the first region.

**7.** The viewer control method according to claim 3, further comprising:

determining an additional actual viewpoint of an additional frame generated by shooting the object from the additional viewpoint in the first coordinate system;
obtaining a first position in the second coordinate system via an interface;
controlling the viewer to display the three-dimensional model viewed from the actual viewpoint if the first position is closer to the actual viewpoint than to the additional actual viewpoint; and
controlling the viewer to display the three-dimensional model viewed from the additional actual viewpoint if the first position is closer to the additional actual viewpoint than to the actual viewpoint.

**8.** The viewer control method according to claim 1, further comprising:
controlling the viewer to display the first region.

**9.** The viewer control method according to claim 1, further comprising:

controlling the viewer to display a second region other than the first region, wherein
the three-dimensional model viewed from a virtual viewpoint in the second region is not displayed by the viewer.

**10.**

The viewer control method according to claim 1, wherein the first region includes actual viewpoints of frames including the frame, the frames each having been generated by shooting the object from a corresponding one of the actual viewpoints including the actual viewpoint, and
the three-dimensional model is generated by performing feature point matching on the frames.

**11.** The viewer control method according to claim 1, wherein
the first region is a region within a predetermined distance from the actual viewpoint.

**12.** The viewer control method according to claim 1, further comprising:
displaying the frame.

**13.** The viewer control method according to claim 1, wherein

the first region includes first actual viewpoints of first frames including the frame, the first frames each having been generated by shooting the object from a corresponding one of the first actual viewpoints including the actual viewpoint, and
the viewer control method further comprises:

obtaining a specified viewpoint that is a virtual viewpoint specified based on an operation by a user;
searching for a second frame shot from a first actual viewpoint that is near the specified viewpoint among the first actual viewpoints; and
displaying the second frame.

**14.** The viewer control method according to claim 13, further comprising:
controlling the viewer to display the first actual viewpoint of the second frame.

**15.** The viewer control method according to claim 13, wherein

in the searching for the second frame, second frames including the second frame are searched for, the second frames having been shot from second actual viewpoints that are first actual viewpoints that are near the specified viewpoint among the first actual viewpoints,
in the displaying of the second frame, the second frames are displayed, and
the viewer control method further comprises:
controlling the viewer to cause a viewpoint of the three-dimensional model displayed by the viewer to be a second actual viewpoint of a second frame that is selected based on an operation by a user among the second frames.

**16.** The viewer control method according to claim 15, further comprising:
controlling the viewer to display three-dimensional models viewed from viewpoints having a predetermined relationship with the second actual viewpoint of the second frame selected.

17. The viewer control method according to claim 13, wherein
in the searching for the second frame, points included in the three-dimensional model viewed from the specified viewpoint are projected onto each of the first frames, and the second frame is determined based on a total number of points projected on each of the first frames.

18. An information processing device that controls a viewer, the information processing device comprising:

a processor; and
memory, wherein
using the memory, the processor:

determines a first region around an actual viewpoint of a frame, the frame having been generated by shooting an object from the actual viewpoint; and
outputs information on the first region to the viewer, wherein

the viewer displays a three-dimensional model of the object viewed from a virtual viewpoint in the first region.

# FIG. 1

# FIG. 2

# FIG. 3

Start

S101

Obtain frames, camera position and orientation information, and three-dimensional model

S102

Display three-dimensional model in viewer

S103

Select virtual viewpoint in accordance with operation by user

S104

Search for frame of actual viewpoint close to virtual viewpoint

S105

Display frame

S106

Change virtual viewpoint to actual viewpoint of frame

S107

No    Has processing ended?

Yes

End

# FIG. 4

132  133                    131

Image search | Viewpoint change

# FIG. 5

132  133                    131

Image search | Viewpoint change

# FIG. 6

Three-dimensional model

Actual viewpoint A

Actual viewpoint C

Virtual viewpoint

Actual viewpoint B

FIG. 7

FIG. 8

FIG. 9

## FIG. 10

132  133                    131

Image search | Viewpoint change

134A
134B

## FIG. 11

132  133                    131                    134

Image search | Viewpoint change

135

## FIG. 12

Enlarged

Size-reduced

# FIG. 13

```
                    ( Start )
                        |
                        |  S111
                        v
   ┌─────────────────────────────────────────────┐
   │ Obtain frames, camera position and orientation│
   │ information, and three-dimensional model      │
   └─────────────────────────────────────────────┘
                        |
                        |  S112
                        v
   ┌─────────────────────────────────────────────┐
   │ Display three-dimensional                     │
   │ model in viewer                               │
   └─────────────────────────────────────────────┘
                        |
                        |  S113
                        v
   ┌─────────────────────────────────────────────┐
   │ Select virtual viewpoint in                   │
   │ accordance with operation by user             │
   └─────────────────────────────────────────────┘
                        |
                        v         S114
              ⟨ Is there actual            ⟩  No
              ⟨ viewpoint close to virtual ⟩ ─────────┐
              ⟨ viewpoint?                 ⟩          │
                        | Yes                         │
                        v  S115                       v  S116
   ┌──────────────────────────────────┐   ┌─────────────────────┐
   │ Display three-dimensional model  │   │ Display warning     │
   │ viewed from actual viewpoint     │   │                     │
   └──────────────────────────────────┘   └─────────────────────┘
                        |                       |
                        v <─────────────────────┘
                            S117
       No    ⟨ Has processing ended? ⟩
                        | Yes
                        v
                    ( End )
```

# FIG. 14

Start

S111
Obtain frames, camera position and orientation information, and three-dimensional model

S112
Display three-dimensional model in viewer

S113
Select virtual viewpoint in accordance with operation by user

S114
Is there actual viewpoint close to virtual viewpoint?

No →

Yes ↓

S115A
Display three-dimensional model viewed from virtual viewpoint

S116
Display warning

S117
Has processing ended?

No

Yes

End

# FIG. 15

```
                    ┌─────────────┐
                    │    Start    │
                    └──────┬──────┘
                           │            S111
                           ▼
    ┌──────────────────────────────────────────────┐
    │ Obtain frames, camera position and orientation │
    │   information, and three-dimensional model      │
    └──────────────────────┬─────────────────────────┘
                           │            S112
                           ▼
    ┌──────────────────────────────┐
    │ Display three-dimensional    │
    │ model in viewer              │
    └──────────────┬───────────────┘
                   │               S113
                   ▼
    ┌──────────────────────────────┐
    │ Select virtual viewpoint in  │
    │ accordance with operation by user │
    └──────────────┬───────────────┘
                   │
                   ▼           S114
              ╱─────────────╲
             ╱      Is        ╲      No
            ╱ there actual     ╲──────────────┐
            ╲ viewpoint close to╱              │
             ╲   virtual        ╱              │
              ╲ viewpoint?     ╱               │
               ╲─────┬────────╱                │
                     │ Yes    S115A            │          S116A
                     ▼                         ▼
    ┌──────────────────────────────┐  ┌──────────────────────────────┐
    │ Display three-dimensional model│  │ Display three-dimensional    │
    │ viewed from virtual viewpoint  │  │ model viewed from actual     │
    │                                │  │ viewpoint                    │
    └──────────────┬───────────────┘  └──────────────┬───────────────┘
                   │                                  │
                   ▼◄─────────────────────────────────┘
              ╱─────────────╲        S117
    No       ╱     Has        ╲
    ┌────────╲ processing ended?╱
    │         ╲────────┬────────╱
    │                  │ Yes
    │                  ▼
    │            ┌─────────────┐
    │            │     End     │
    │            └─────────────┘
    └──────────────┐ (back to S113)
```

## FIG. 16

Start

S111

Obtain frames, camera position and orientation information, and three-dimensional model

S112

Display three-dimensional model in viewer

S113

Select virtual viewpoint in accordance with operation by user

S114A

Is virtual viewpoint in first region?

No

S115A

Yes

Display three-dimensional model viewed from virtual viewpoint

S116

Display warning

S117

No

Has processing ended?

Yes

End

# FIG. 17

# FIG. 18

## INTERNATIONAL SEARCH REPORT

| International application No. |
|---|
| **PCT/JP2023/003988** |

### A. CLASSIFICATION OF SUBJECT MATTER

***G06T 15/20***(2011.01)i; ***G06T 19/00***(2011.01)i
FI: G06T15/20 500; G06T19/00 A

According to International Patent Classification (IPC) or to both national classification and IPC

### B. FIELDS SEARCHED

Minimum documentation searched (classification system followed by classification symbols)

G06T15/20; G06T19/00; G06T7/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/059669 A1 (SONY CORP.) 01 April 2021 (2021-04-01) paragraphs [0010]-[0096], [0172]-[0184], fig. 11, 16, 20 | 1-4, 11, 18 |
| Y | paragraphs [0010]-[0096], [0172]-[0184], fig. 11, 16, 20 | 5, 7-10, 12-14 |
| A | paragraphs [0010]-[0096], [0172]-[0184], fig. 11, 16, 20 | 6, 15-17 |
| Y | JP 2018-112997 A (CANON INC.) 19 July 2018 (2018-07-19) paragraphs [0082], [0153] | 5 |
| Y | JP 2020-205549 A (CANON INC.) 24 December 2020 (2020-12-24) paragraphs [0029], [0044]-[0049], fig. 5 | 7, 12-14 |
| Y | WO 2021/020200 A1 (FUJIFILM CORP.) 04 February 2021 (2021-02-04) paragraphs [0131]-[0138] | 8-9 |
| Y | JP 2012-160937 A (CASIO COMPUTER CO., LTD.) 23 August 2012 (2012-08-23) paragraphs [0031]-[0034] | 10 |
| Y | JP 2016-126425 A (KDDI CORP.) 11 July 2016 (2016-07-11) paragraphs [0062]-[0067] | 10 |

☐ Further documents are listed in the continuation of Box C.　　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/003988**

| Patent document cited in search report | | | Publication date (day/month/year) | Patent family member(s) | | | Publication date (day/month/year) |
|---|---|---|---|---|---|---|---|
| WO | 2021/059669 | A1 | 01 April 2021 | US | 2022/0329770 | A1 | |
| | | | | paragraphs [0047]-[0131], [0207]-[0219], fig. 11, 16, 20 | | | |
| | | | | EP | 4012664 | A1 | |
| | | | | CN | 114450713 | A | |
| JP | 2018-112997 | A | 19 July 2018 | US | 2018/0204381 | A1 | |
| | | | | paragraphs [0112], [0184] | | | |
| JP | 2020-205549 | A | 24 December 2020 | US | 2020/0402281 | A1 | |
| | | | | paragraphs [0037], [0052]-[0057], fig. 6 | | | |
| WO | 2021/020200 | A1 | 04 February 2021 | US | 2022/0141442 | A1 | |
| | | | | paragraphs [0168]-[0175] | | | |
| JP | 2012-160937 | A | 23 August 2012 | US | 2012/0194513 | A1 | |
| | | | | paragraphs [0063]-[0067] | | | |
| | | | | CN | 102682469 | A | |
| JP | 2016-126425 | A | 11 July 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20210141775 A